# EUROPEAN PATENT APPLICATION

(11) **EP 3 151 031 A1**
(43) Date of publication of application: **05.04.2017**
(21) Application number: 15188127.3
(22) Date of filing: 02.10.2015
(51) Int. Cl.: G01S 5/16, F41G 3/32, F41G 3/16, F41G 3/22

(54) **MILITARY ELECTRO-OPTICAL SENSOR TRACKING**

(71) Applicant: METRONOR A/S, 1360 Nesbru (NO)
(72) Inventor: Rotvold, Oyvind, 1395 Hvalstad (NO)
(74) Representative: Lang, Johannes

(57) **Abstract**

A weapon platform (1) such as an armored fighting vehicle, a tank, a naval patrol vehicle or the like is suggested, comprising an electro-optical sensor unit (4) comprising one or more sensors (5) as a high-magnification camera system, a low-light-level camera system, an infrared sensor, a laser distance meter or the like connected to the weapon platform (1), a remote weapon station (2) connected to the weapon platform (1), a weapon (3) connected to the remote weapon station (2) for controlling the remotely controlled weapon onto a target based on an input from the sensor unit (4). This weapon platform (1) is characterized by an electro-optical tracking camera (7) connected to the sensor unit (4), at least three targets (8) placed on the weapon platform (1), the remote weapon station (2) or the weapon (3), the relative positions of the targets to each other being known and the targets being observable by the camera (7), and calculation means for calculating the relationship between the position of the sensor unit (4) and the weapon (3) in the six degrees of freedom (X, Y, Z, pitch, yaw, roll).

## Description

### Background

Electro-optical sensors play an increasingly important role in modern warfare, and many weapon platforms such as e.g. armored fighting vehicles, tanks or naval patrol vessels are equipped with electro-optical sensor units consisting of one or more electro-optical sensors. The sensor units are used to detect, track and guide weapons onto potential targets at long ranges.

Such sensors units may include e.g. high-magnification camera systems, low-light-level camera systems, infrared sensors as well as laser distance meters and other systems. Mostly, these several sensors are integrated into a single physical sensor unit that can be rotated and tilted.

To secure an unimpeded view to potential targets, such sensors units are frequently mounted on a pedestal at some height above the weapon platform, and said pedestal may be extendible to heights of several meters to secure a clear field of view even when the weapon platform is obscured by e.g. vegetation or terrain.

The sensor unit is often connected to a so-called remote weapon station, a remotely controlled mechanical unit that provides a stable basis that can be rotated and tilted. Various weapons can be attached to various types of remote weapon stations, ranging from single guns to complex parallel arrangements of guns, mortars and missile launchers. The remote weapon station therefore provides a way to precisely aim weapons while the operator is elsewhere; typically well protected behind armor.

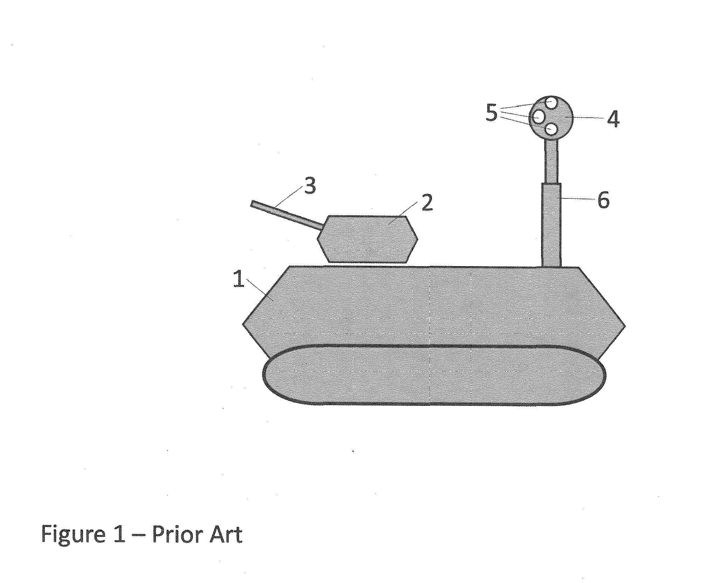

This is shown in Fig. 1, where a weapon platform 1 is shown as an armored fighting vehicle with a rotatable remote weapon station 2 holding a weapon 3. The vehicle is also equipped with a sensor unit 4 holding one or more sensors 5, said sensor unit 4 being mounted on a pedestal 6.

While some remote weapon stations have sensors built into the station itself, this has a number of drawbacks. Operation of the weapon will impact sensor performance by expelling smoke and gas, jeopardize precision and durability through recoil shock and vibration, and the heavy weapon station may not be moved as quickly as one would want to spin sensor units. In addition, mounting anything other than very light weapons on pedestals is impractical and therefore an unrestricted view from an integrated sensor is difficult to achieve, so a separate sensor unit brings several advantages.

The crew of the weapon platform may then use the information from the sensor unit to direct the separate remote weapon station onto targets, and then to identify, track and engage said target.

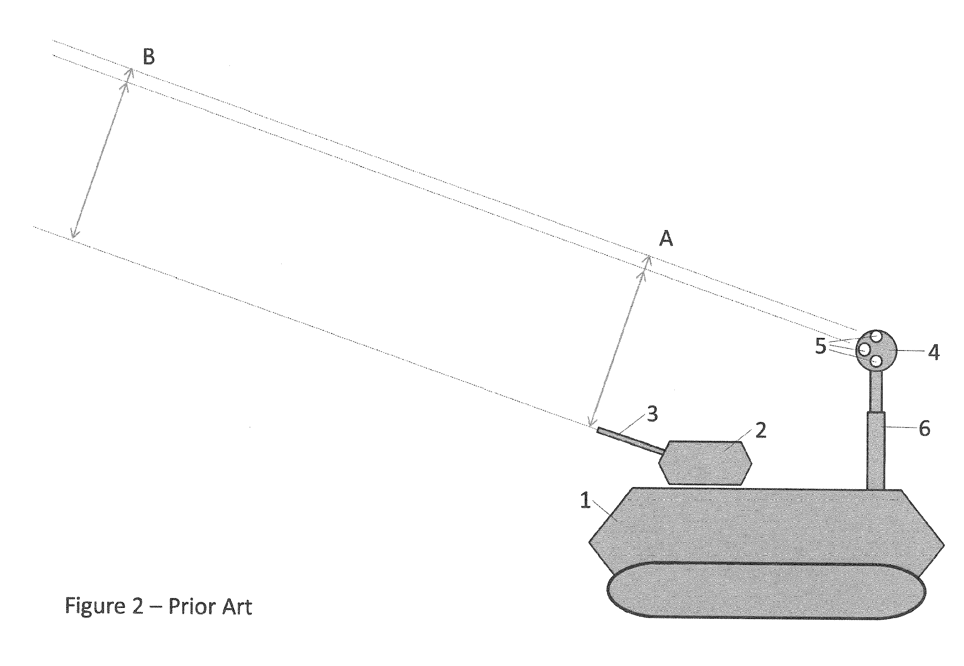

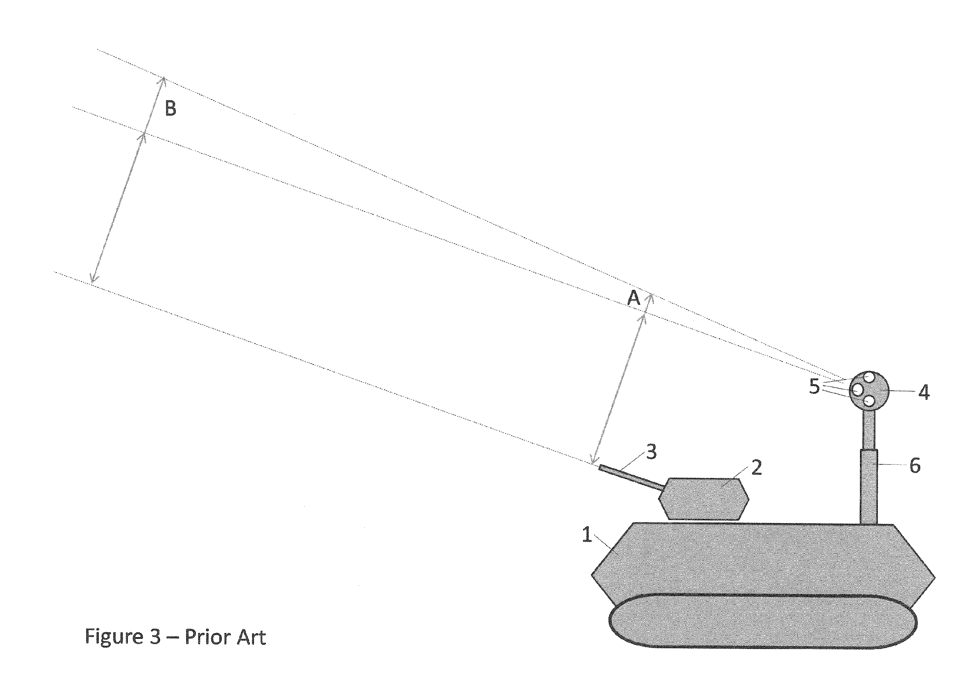

The precision with which a target can be engaged by a remote weapon station based on input from a remotely located electro-optical sensor unit clearly depends on the precision with which the relationship between the two is known. As shown in Fig. 2, when targeting an object far away, any error or variation in the location of one unit relative to the other (shown as A) will only result in an aiming error of the same magnitude (shown as B). However, as shown in Fig. 3, any error in angle or orientation of one unit relative to the other (shown as A) will result in an aiming error (shown as B) that will grow with the distance to the target and that will therefore quickly render the weapon unable to effectively engage the target.

In practice, there is therefore a fundamental challenge in combining the requirement to place the electro-optical sensor unit in an optimal position - typically as high as possible - for an unimpeded view, and the requirement to very precisely control its angle or orientation relative to the remote weapon station.

If a pedestal 6 holding the sensor unit 4 is fixedly mounted to the weapon platform 1 as shown in Figs. 1, 2 and 3, the position of the sensor unit 4 relative to the remote weapon station 1 can be determined by various methods during manufacture or installation, and their relative position and orientation can continuously be determined from angle measurement devices integrated into their rotating mechanisms. However, for a linearly extendible pedestal as shown in the figures, an additional position sensor is needed and also the precise angle or direction of the pedestal extension must be known as well as any deviations from a straight line. For a folding extension design, a plurality of angle sensors is needed, in addition to a very precise knowledge of the folding axis in each joint.

The operating environment will further complicate this picture. For stationary weapon platforms - such as a well-camouflaged stationary armored fighting vehicle - the main challenge is the effect of wind on tall sensor pedestals, while for moving weapon platforms - such as a patrol vessel at sea - the main challenge is the effects of the pitching and rolling movements of the weapon platform itself.

This conflict has been attempted to be overcome by e.g. guy wires - impractical on any extendible pedestal - or displacement sensors inside the pedestal itself - well suited to track pedestal elongation, less suited to track minute pedestal bending - or simply building very stiff pedestals - thereby increasing unit weight, size and therefore detectability.

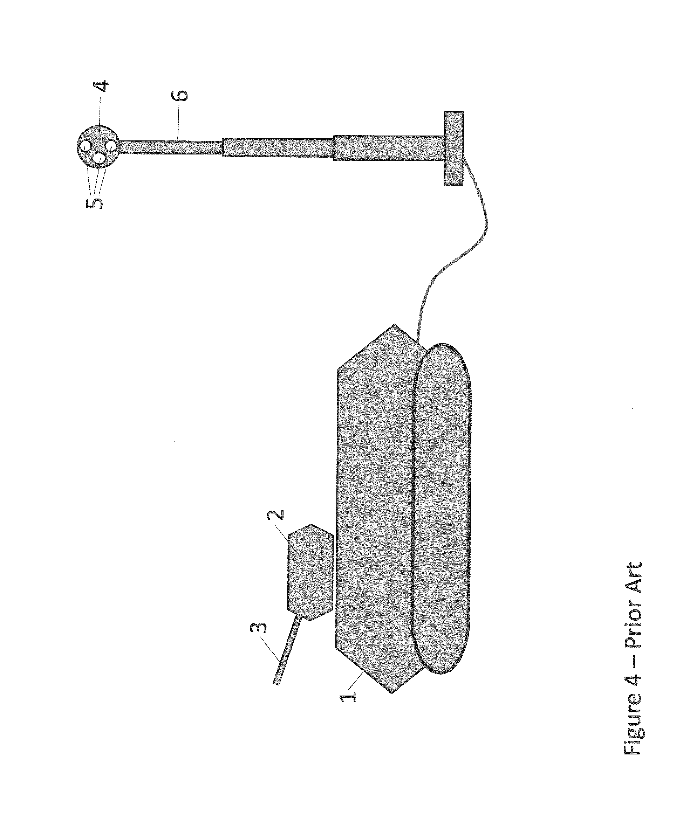

It may be operationally advantageous to mount the sensor unit pedestal - whether extendible or not - away from the weapon platform as shown in Fig. 4. This may for example provide a better combination of sensor field-of-view and weapon platform protection.

It is clear that in such a scenario, the precise spatial relationship between the sensor unit and the remote weapon station must be determined in the field. It would be beneficial to carry out such a determination as quickly as possible, since frequent weapon platform re-positioning will typically be required in a combat situation.

As for fixedly mounted pedestals, the operating environment will cause the spatial relationship between the sensor unit and the remote weapon station to change over time, and these changes may well become sufficient to render the weapon ineffective.

It should be noted that a similar problem exists also for portable radar systems, also often placed on extendible pedestals e.g. on heavy trucks or on separate pedestals. Since a radar system is basically an angle and distance measurement device, it is only efficient as a guidance device for e.g. anti-aircraft guns if the precise angular relationship between the radar and the gun is known. For example in heavy winds, this relationship can vary considerably due to the large surface of modern planar radar antennas.

### Present invention

The present invention is defined by a weapon platform as defined in independent claim 1 or 2. Advantageous embodiments of the invention are defined in dependent claims 3 to 5.

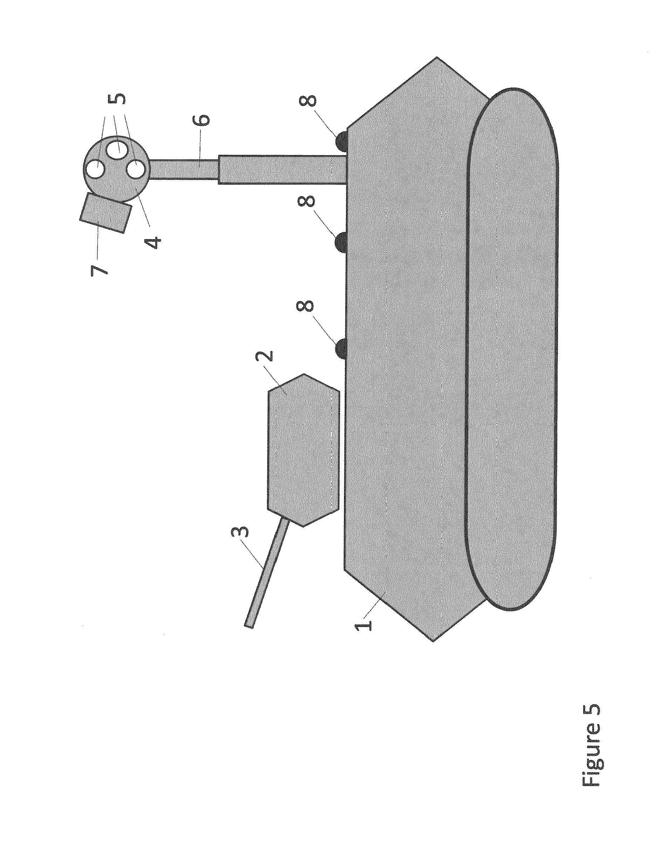

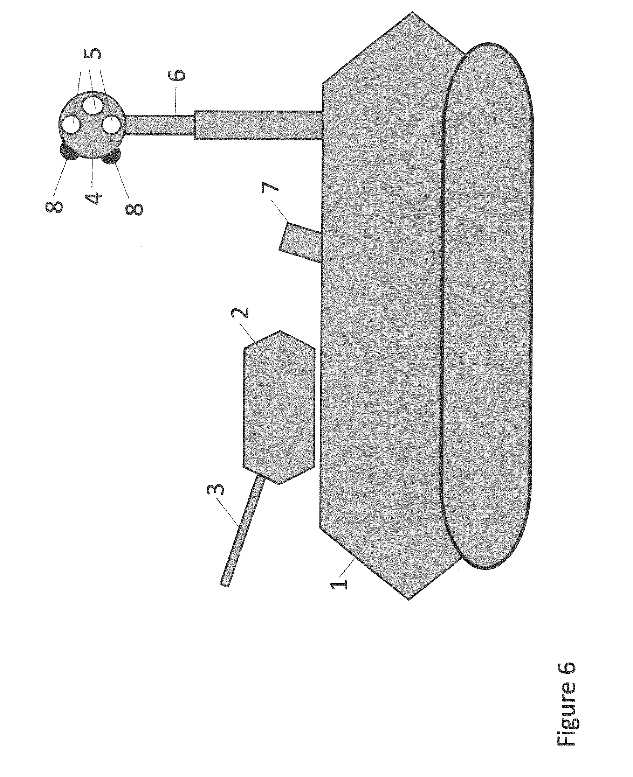

In the following, embodiments of the invention are described in connection with Figs. 5 and 6.

The present invention as shown in Fig. 5 solves the conflict by introducing an electro-optical tracking camera 7 attached to the sensor unit 4 and therefore rotating and tilting together with this. Said tracking camera 7 observes targets 8 placed on the weapon platform 1 itself - e.g. on the roof of the armored fighting vehicle. The targets 8 can also be placed on the remote weapon station 2 or on the weapon 3. Alternatively, the camera 7 can be connected to the weapon platform 1, the remote weapon station 2 or the weapon 3 and the targets 8 can be placed on the sensor unit 4 as shown in Fig. 6.

The electro-optical sensor unit 4 is necessarily relatively compact and rigid to ensure that the sensors 5 remain in a known position and orientation relative to the pan and tilt mechanism, and since the tracking camera is fixedly mounted to the electro-optical sensor unit 4, its position and orientation relative to said sensor unit 4 can be determined with great accuracy and this relationship will remain constant during operation.

Since the position of the targets 8 fixedly mounted to the weapon platform 1 can also be determined with great precision relative to the weapon platform 1 and therefore to any remotely operated weapon station 2 mounted on said weapon platform 1, the precise relative position of the electro-optical sensor unit 4 to the remote weapon station 2 can be determined in a process similar to that presented in EP o 880 674.

From EP o 880 674, it is known that a single camera observing three or more targets that have known relative positions to each other, is sufficient to calculate the precise location and position of the camera relative to the pattern of targets. In the present invention, the camera observation enables calculation of the relationship between the position of the senor unit 4 and the remote weapon station 2 in six degrees of freedom - X, Y, Z, pitch, yaw and roll.

Since, as shown in Figs. 2 and 3, the relative position of the sensor unit 4 and the remote weapon station 2 is far less critical than the angular relationship, and if the approximate positional relationship is already known, a simplified approach may be employed. This would e.g. be applicable where the pedestal 6 is not extendible, where it is linearly extendible and includes a displacement sensor and for legacy systems where a sensor unit positional measurement system already exists.

If the approximate relative position of the sensor unit and the remote weapon station is known, then observing two targets is sufficient to calculate the angular relationship between the sensor unit 4 and the remote weapon station 2. Reducing the number of targets makes installation easier, and makes it easier to ensure that the required number of targets is always visible to the camera regardless of the sensor unit's orientation.

If using active, emitting targets, it will be advantageous to keep emissions as low as possible and to mount the targets in such a way that they only emit in a direction towards the sensor unit 4, in order to avoid detection of the targets by enemy systems.

### Drawings legend

1 - Weapon platform
2 - Remote weapon station
3 - Weapon
4 - Sensor unit
5 - Sensors
6 - Pedestal
7 - Camera
8 - Targets

## Claims

1. Weapon platform (1) such as an armored fighting vehicle, a tank, a naval patrol vehicle or the like, comprising
- a sensor unit (4) comprising one or more sensors (5) as a high-magnification camera system, a low-light-level camera system, an infrared sensor, a laser distance meter, a radar or the like connected to the weapon platform (1),
- a remote weapon station (2) connected to the weapon platform (1),
- a weapon (3) connected to the remote weapon station (2),
for controlling the remotely controlled weapon onto a target based on an input from the sensor unit (4),
**characterized by**
- an electro-optical tracking camera (7) connected to the sensor unit (4),
- at least three targets (8) placed on the weapon platform (1), the remote weapon station (2) or the weapon (3), the relative positions of the targets (8) to each other being known and the targets (8) being observable by the camera (7), and
- calculation means for calculating the spatial relationship between the sensor unit (4) and the weapon (3) in the six degrees of freedom (X, Y, Z, pitch, yaw, roll).

2. Weapon platform (1) such as an armored fighting vehicle, a tank, a naval patrol vehicle or the like, comprising
- a sensor unit (4) comprising one or more sensors (5) as a high-magnification camera system, a low-light-level camera system, an infrared sensor, a laser distance meter, a radar or the like connected to the weapon platform (1),
- a remote weapon station (2) connected to the weapon platform (1),
- a weapon (3) connected to the remote weapon station (2),
for controlling the remotely controlled weapon onto a target based on an input from the sensor unit (4),
**characterized by**
- an electro-optical tracking camera (7) connected to the weapon platform (1), the remote weapon station (2) or the weapon (3),
- at least three targets (8) placed on the electro-optical sensor (4), the relative positions of the targets (8) to each other being known and the targets (8) being observable by the camera (7), and
- calculation means for calculating the spatial relationship between the sensor unit (4) and the weapon (3) in the six degrees of freedom (X, Y, Z, pitch, yaw, roll).

3. Weapon platform (1) according to claim 1 or 2, **characterized by** only two targets (8) and by calculating means for calculating the spatial relationship between the sensor unit (4) and the weapon (3) with respect to pitch, yaw and roll coordinates.

4. Weapon platform (1) according to one of claims 1 to 3, wherein sensor unit (4) is mounted on a pedestal (6) fixedly mounted to the weapon platform (1) or arranged away from the weapon platform (1) but functionally connected thereto.

5. Weapon platform (1) according to claim 4, wherein the pedestal (6) is extendible.

6. Weapon platform (1) according to any of claims 1 through 5, wherein the targets (8) are active, light-emitting targets.
